# EUROPEAN PATENT APPLICATION

(11) **EP 0 949 628 A2**
(43) Date of publication of application: **13.10.1999**
(21) Application number: 99650031.0
(22) Date of filing: 06.04.1999
(51) Int. Cl.: G11B 33/04

(54) **Portable compact disc storage container**

(30) Priority: 08.04.1998 US 81110 P
(71) Applicant: Allsop, Inc., Bellingham, Washington 98226 (US)
(72) Inventor: Allsop, James D., Bellingham, Washington 98226 (US); Clausen, Eivind, Bellingham, Washington 98226 (US)
(74) Representative: Kelly, Peter F.

(57) **Abstract**

A portable container for storing compact discs comprises a substantially circular outer shell (2) containing a plurality of substantially circular envelopes (4, Fig. 7) each for holding a respective compact disc. The outer shell (2) comprises two shell halves (6, 8) which are hinged together for closing one upon the other to enclose the envelopes within the shell. Each envelope has a peripheral tab for releasably engaging one of several pins (15) inside the shell.

## Description

This invention relates to containers for holding electronic media storage devices, and more specifically, containers for holding compact discs that store digitized electronic data.

Containers for holding electronic data storage devices, such as compact discs, are well known. However, the known containers are often excessively bulky. Additionally, known compact disc storage containers either store a plurality of compact discs such that each individual compact disc is difficult to access, or, if easy to access, is not sufficiently protected from scratching, pitting, or other damage that compromises the ability to recover the stored digital data.

A need thus exists for a portable compact disc storage container that is compact and that stores a plurality of compact discs in a convenient-to-access, yet secure and protected manner.

This need is met by the invention claimed in claim 1.

An embodiment of the invention will now be described, by way of example, with reference to the accompanying drawings, in which:
FIGURE 1 is a perspective view of the exterior shell of the portable compact disc storage container of the present embodiment;
FIGURE 2 is a top view of the exterior shell of the portable compact disc container of the present embodiment in the closed position;
FIGURE 3 is an end view of the exterior shell of the portable compact disc storage container of the present embodiment;
FIGURE 4 is a top view of the exterior shell of the portable compact disc storage container in the open position;
FIGURE 5 is an exposed side view of the exterior shell of the portable compact disc storage container in the open position;
FIGURE 6 is a first top view of an interior envelope of the portable compact disc storage container of the present embodiment;
FIGURE 7 is a second top view of an interior envelope of the portable compact disc storage container of the present embodiment holding a compact disc; and
FIGURE 8 is a top view of the exterior shell and interior envelope of the portable compact disc storage container of the present embodiment.

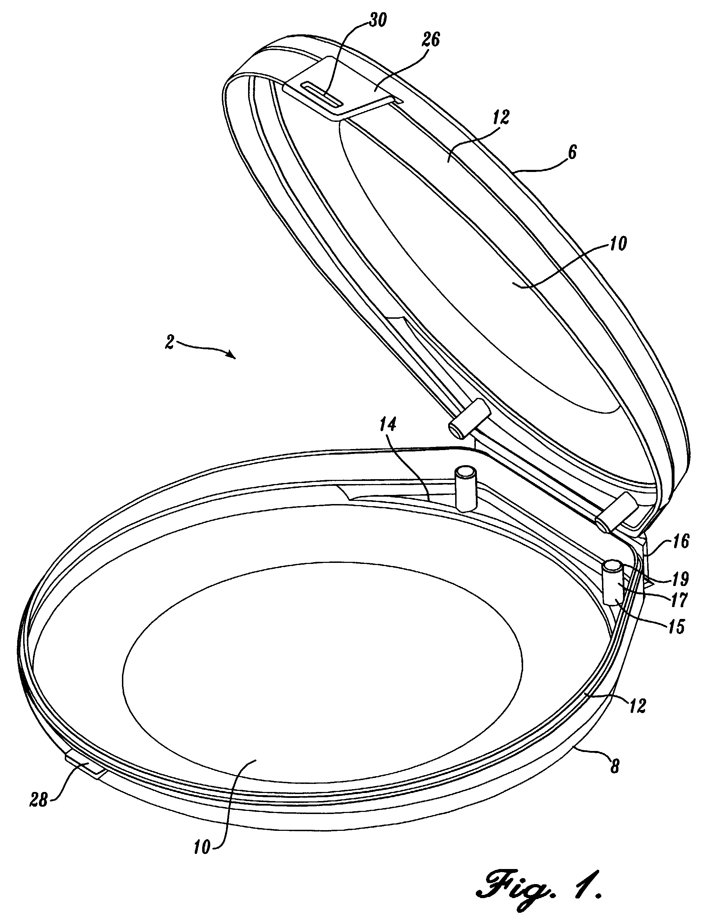

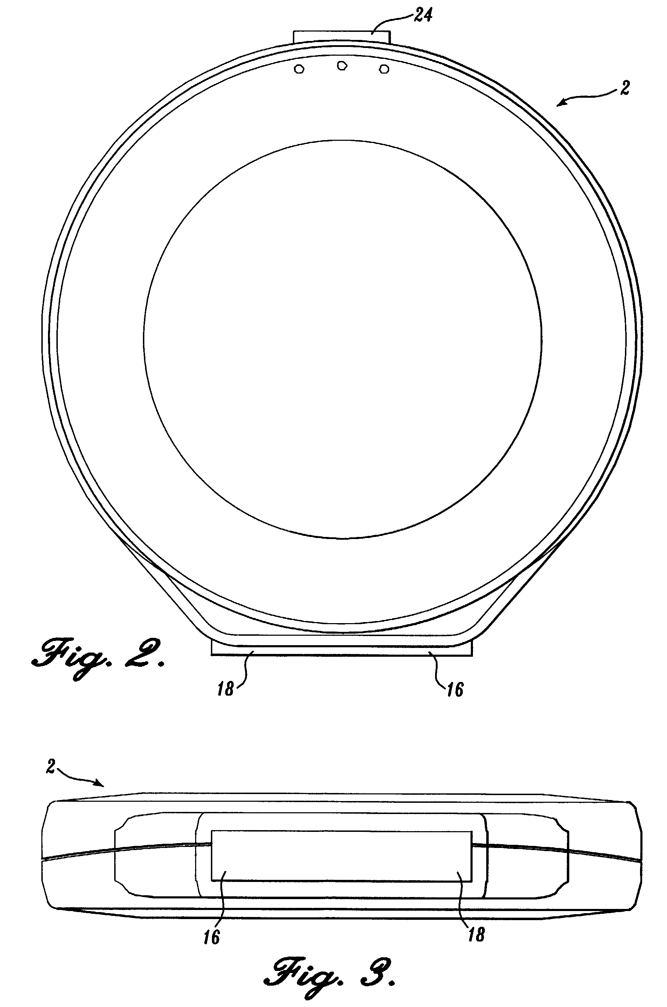

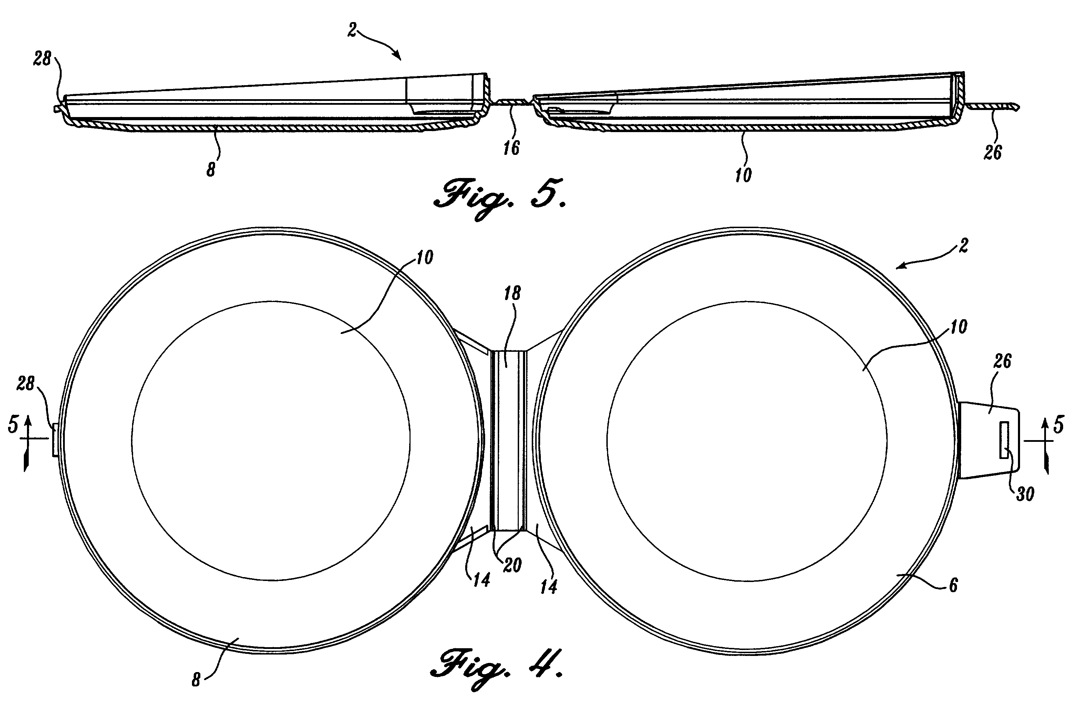

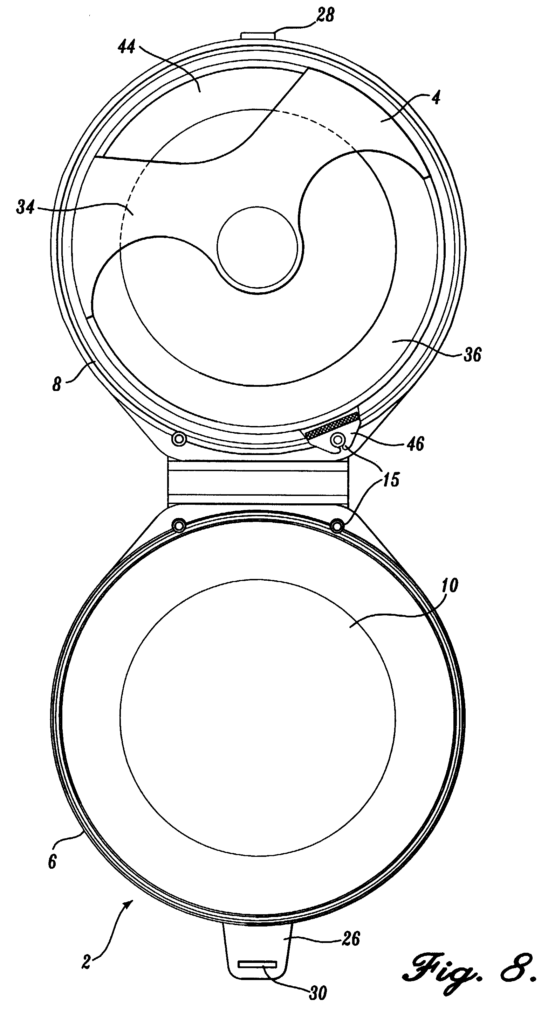

Referring to FIGURES 1-8, a portable container for storing compact discs (which term is intended to include CD-ROMs, DVDs and similar disc-like digital storage media) includes an exterior shell 2 containing a plurality of interior envelopes 4. As will be described in further detail below, the interior envelopes 4 are removably attached to the interior of exterior shell 4 and a separate compact disc is removably held within each interior envelope 4. Referring specifically to FIGURES 1-5, exterior shell 2 comprises two shell halves 6 and 8, respectively. Each shell half 6 and 8 includes a preferably substantially circular central portion 10. Preferably, the diameter of central portion 10 is slightly greater than the diameter of the compact disc to be placed within interior envelopes within exterior shell 2. Each central portion 10 is bounded by an exterior wall 12 such that each exterior wall 12 is located around the external periphery of most of central portion 10. The height of the two exterior walls 12 is selected to provide the desired internal volume of exterior shell 2 to hold a predetermined number of compact discs therein.

Each shell half 6, 8 has a pin base 14, which is an area that is raised relative to the respective central portion 10 and projects outwardly from part of the periphery of central portion 10. Pin base 14 comprises two substantially triangular portions and is bounded on its inside edge by the arcuate periphery of the central portion 10 and on its outside edge by exterior wall 12. Exterior wall 12 is substantially linear along the outside edge of pin base 14. The circular configuration of central portion 10, with pin base 14 located adjacent a part of the periphery of central portion 10, and with exterior wall 12 bounding the circular periphery of central portion 10 except at the location of pin base 14 where exterior wall 12 is substantially linear, results in shell halves 6 and 8 being substantially scallop shaped. Exterior shell 2 preferably comprises a synthetic polymer and is most preferably a type of plastic. Upstanding pins 15 are located on the triangular portions of pin base 14. As shown, four pins 15 are present, one each on each of the two triangular portions of each pin base 14 of the shell halves 6 and 8. However, it should be noted that less than four pins 15 can be employed. Each pin 15 includes a shaft 17 and a head 19 having a diameter greater than that of shaft 17.

The shell halves 6 and 8 are connected by a hinge 16 at their edges to allow the shell halves to be closed one upon the other to enclose the envelopes 4 within the shell or opened to allow access to the envelopes. Hinge 16 is an elongate member comprising a central section 18 between two exterior sections 20. Each exterior section 20 is attached to the exterior wall 12 of a respective one of the shell halves 6 and 8 where exterior wall 12 is linear and bounds pin base 14. The thickness of hinge 16 is less at the two lines of connection of central section 18 to exterior sections 20 than is the thickness of hinge 16 at central section 18 and exterior sections 20. Thus, opening and closing of exterior shell 2 is facilitated by pivoting movement of shell halves 6 and 8 at the thinner points of attachment of central section 18 to exterior sections 20 of hinge 16. Hinge 16 is preferably comprised of a synthetic polymer, preferably a plastic material of the same type as shell halves 6 and 8 of exterior shell 2.

A latch 24 is located on exterior shell 2 and is preferably diametrically opposed to the location of hinge 16. More specifically, latch 24 comprises a tab 26 on one of shell halves 6 and 8 and a rib 28 on the other of shell halves 6 and 8. Rib 28 is an elongate protrusion that is aligned to mate with slot 30 of tab 26. Rib 28 has a nub thereon that provides a snap fit with slot 30 of tab 26. As with shell halves 6 and 8 and hinge 16, latch 24 comprises a synthetic polymer, preferably a plastic, and the attachment of tab 26 to shell half 6 or 8 is by plastic of a lesser thickness than the thickness of tab 26. In this manner, tab 26 can pivot with respect to the shell half 6 or 8 on which it is attached so that slot 30 of latch 24 can removably engage rib 28 to clasp and unclasp latch 24. It should be noted that, preferably, exterior shell 2 is formed from an injection molding process whereby shell halves 6 and 8, hinge 16 and latch 24 form a single, unitary construct.

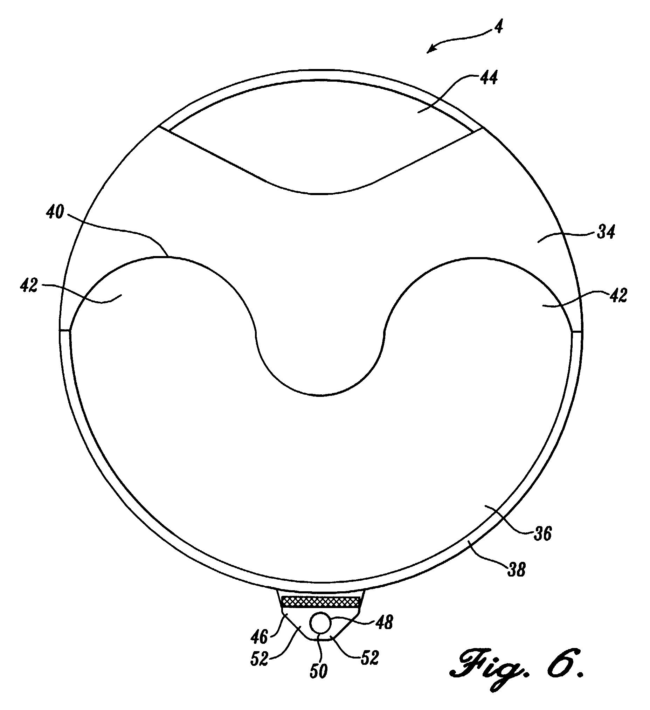

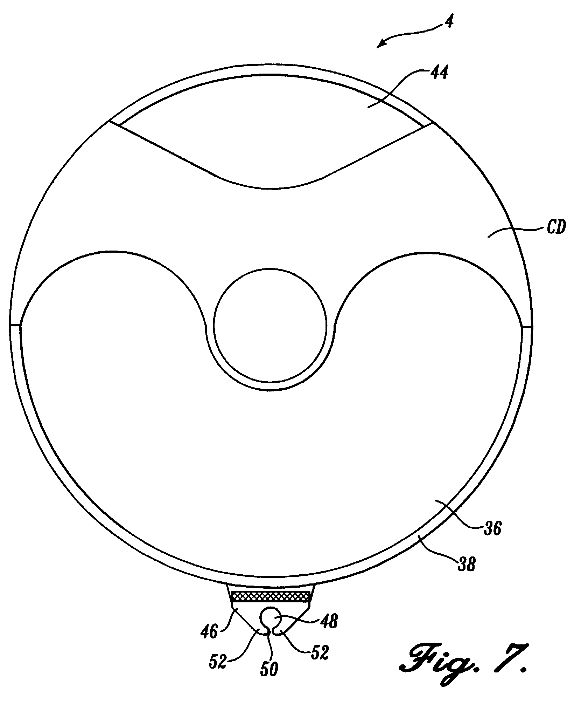

Next, referring specifically to FIGURES 6 and 7, interior envelope 4 is described in detail. As stated above, a plurality of interior envelopes 4 are removably insertable in exterior shell 2 of the portable compact disc storage container of the present embodiment. Each interior envelope 4 comprises a substantially circular backing member 34 preferably comprised of a lightweight, flexible and sturdy material. Backing member 34 is sized to have an external diameter slightly greater than the compact disc or other electronic storage medium to be contained within interior envelope 4. Interior envelope 4 also includes a fore layer 36. Fore layer 36, comprising a thin yet strong synthetic polymer, is substantially semicircular, having an arcuate outer edge 38 that is affixed to the periphery of backing member 34 by stitching or heat welding, for example. Fore layer 36 also has an inner edge 40 that is sinusoidal in shape such that fore layer 36 has two laterally disposed lobes 42 between which the center hole of a compact disc inserted in interior envelope 4 is exposed and, therefore, accessible. Thus the user can insert and remove the compact disc from interior envelope 4 by placing a thumb in the center hole of the compact disc such that the data access side of the compact disc is not handled, as will be explained further below.

A grip layer 44 is affixed to the periphery of backing member 34 at a location preferably diametrically opposite to the orientation of fore layer 36 on backing member 34. Grip layer 44 preferably comprises a thin synthetic polymer layer having strength and flexibility, and has an outer edge which is fixed to the periphery of backing member 34 by stitching or heat welding, for example. Grip layer 44 preferably has a shape defined by its periphery being comprised of two complementary arcuate segments. To insert a compact disc in interior envelope 4, interior envelope 4 is held in one of the user's hands and the compact disc is held in the other, with the user's thumb inserted in the center hole of the compact disc and the user's fingers grasping a portion of the outside edge of the compact disc. The compact disc is slipped between backing member 34 and fore layer 36. The central depression of fore layer 36 bounded by lobes 42 allows the user's thumb to remain in the center hole of the compact disc while the disc is fully inserted between backing member 34 and fore layer 36 without the user's thumb contacting fore layer 36. Next, the user's thumb is removed from the center hole of the compact disc and the user grasps grip layer 44 between thumb and forefinger. The grip layer is then placed over the edge of the compact disc that is opposite from the edge that has nested between the backing member 34 and fore layer 36. The compact disc CD, Fig. 7, is now securely held within interior envelope 4.

To remove the compact disc from interior envelope 4, the above process is reversed. More specifically, the grip layer 44 is grasped between thumb and forefinger and the grip layer is drawn away from the edge of the compact disc. Next, the user's thumb is inserted into the center hole of the compact disc and the user's fingers grasp the exterior edge of the compact disc remote from fore layer 36. The compact disc is then drawn out of backing member 34 and fore layer 36. Alternatively, the compact disc is not drawn out of backing member 34 and fore layer 36. Instead, the edge of the compact disc freed from grip layer 44 is inserted into the compact disc reading apparatus, which draws the remainder of the compact disc out from between backing member 34 and fore layer 36. In this manner, the compact disc is not touched by the user's hands and thus remains free from dirt, body oils, and scratches.

An attachment tab 46 is fixed to the periphery of backing member 34 by, for example, heat welding, at a location preferably diametrically opposite to the location of grip layer 44 on backing member 34. Attachment tab 46 preferably has a frusto-pyramidal shape and has a pin orifice 48 centrally located therein. Slit 50, starting at the truncated apex of attachment tab 46, terminates at pin orifice 48 and has a width less than the diameter of the pins 15. Slit 50 thus defines the outer extent of the two arms 52 of attachment tab 46. Attachment tab 46 preferably comprises a synthetic polymer, preferably a plastics, that is structurally rigid so that the tab 46 is normally retained on the pin 15 but has sufficient flexing qualities to allow relative movement between arms 52 for snap-fit attachment of tab 46 to, and snap-release removal of tab 46 from, one of the pins 15 of exterior shell 2. More specifically, in order to access a compact disc in an interior envelope 4 located in exterior shell 2 of the portable compact disc storage container of the present embodiment, the desired interior envelope 4 is first removed from exterior shell 2 by pulling firmly on interior envelope 4 adjacent grip layer 44 thereof in a direction perpendicular to the longitudinal axis of pin 15. The aforesaid force causes arms 52 of attachment tab 46 to separate, allowing pin 15 of exterior shell 2 to pass through slit 50 of attachment tab 46, thus separating interior envelope 4 from exterior shell 2. The desired compact disc is then removed from interior envelope 4 in the manner previously described above.

As stated above, when removing interior envelope 4 from exterior shell 2 by separating attachment tab 46 from pin 15, a force substantially perpendicular to the longitudinal axis of pin 15 is applied to interior envelope 4. However, when replacing the now empty interior envelope 4 in exterior shell 2 for storage and safe keeping, attachment tab 46 is reattached to pin 15 by orienting pin orifice 48 over pin 15 and pressing downwardly on attachment tab 46 with a force parallel to the longitudinal axis of pin 15 such that arms 52 of attachment tab 46 separate to accommodate passage of pin orifice 48 over head 19 of pin 15, since pin orifice 48 has a diameter smaller than that of head 19. After pin orifice 48 has passed over head 19, arms 52 return to their original configuration due to the resilient qualities of attachment tab 46 such that pin orifice 48 surrounds shaft 17 of pin 15, shaft 17 having a diameter less than that of pin orifice 48. When a compact disc is to be replaced into an empty interior envelope 4, the empty interior envelope 4 is again pulled with a force perpendicular to the longitudinal axis of pin 15 as described above, in order to remove interior envelope 4 from exterior shell 2.

After the compact disc has been replaced in interior envelope 4 in the manner described above, interior envelope 4, now containing the compact disc, is again attached to exterior shell 2 by pushing attachment tab 46 down onto pin 15 with a force substantially parallel to the longitudinal axis of pin 15 such that pin orifice 50 passes overhead 19 of pin 15 and surrounds shaft 17 of pin 15.

While the preferred embodiment of the invention has been illustrated and described, it will be appreciated that various changes can be made therein without departing from the spirit and scope of the invention.

## Claims

1. A portable container for storing compact discs, the container comprising an outer shell (2) containing a plurality of envelopes (4) each for holding a respective compact disc.

2. A container as claimed in claim 1, wherein the outer shell (2) comprises two shell halves (6, 8) which can be closed one upon the other to enclose the envelopes within the shell or opened to allow access to the envelopes.

3. A container as claimed in claim 2, wherein the shell halves (6, 8) are hinged (16) together at their edges.

4. A container as claimed in claim 3, further including a latch (24) for holding the shell halves (6, 8) closed.

5. A container as claimed in any preceding claim, wherein the envelopes (4) are releasably attached to the shell (2).

6. A container as claimed in claim 5, wherein at least one shell half (6, 8) includes an upstanding pin (15) which is disposed adjacent the inside periphery of the shell (2) when the latter is closed, and each envelope (4) has means (46) at its edge for releasable attachment to the pin (15).

7. A container as claimed in claim 6, wherein the releasable attachment means comprises a tab (46) having an orifice (48) therein for receiving the pin (15).

8. A container as claimed in claim 7, wherein the tab (46) further has a slit (50) extending from the orifice (48) to the edge of the tab, the width of the slit (50) being less than the diameter of the pin (15) so that the tab (46) is normally retained on the pin but the tab being sufficiently flexible to allow the tab to be removed from the pin by the pin passing through the slit (50).

9. A container as claimed in any preceding claim, wherein the shell halves (6, 8) are substantially circular.

10. A container as claimed in any preceding claim, wherein the envelopes (4) are substantially circular.

11. A container as claimed in claim 10, wherein each envelope (4) comprises a substantially circular backing member (34) and a fore layer (36) partially covering the surface of the backing member, the fore layer (36) having an outer edge attached to the periphery of the backing member to form a pocket to receive a portion of a compact disc.

12. A container as claimed in claim 11, wherein the inner edge of the fore layer (36) is shaped to expose the centre hole of a compact disc in the pocket.

13. A container as claimed in claim 11 or 12, wherein the envelope (4) also includes a grip layer (44) partially covering the surface of the backing member (34), the grip layer (44) being spaced from the fore layer (36) and having an outer edge attached to the periphery of the backing member (34) to form a further pocket to receive another portion of the compact disc.

14. A container as claimed in claim 13, wherein the grip layer (44) is substantially diametrically opposite the fore layer (36).
